# EUROPÄISCHE PATENTSCHRIFT

(11) **EP 1 469 248 B1**
(45) Veröffentlichungstag und Bekanntmachung des Hinweises auf die Patenterteilung: **21.06.2006**
(21) Anmeldenummer: 04008851.0
(22) Anmeldetag: 14.04.2004
(51) Int. Cl.: F16L 37/60

(54) **In eine Versorgungseinheit einsetzbare Buchse zur Aufnahme und Positionierung eines Anschlusselements**
Bushing being insertable into a supply unit to receive and position a connecting element
Douille insérable à une unité d'alimentation pour recevoir et positionner un élément de raccordement

(30) Priorität: 16.04.2003 DE 10317444
(43) Veröffentlichungstag der Anmeldung: 20.10.2004
(73) Patentinhaber: TRILUX-LENZE GmbH & Co. KG, 9759 Arnsberg (DE)
(72) Erfinder: Hauschulte, Hermann, Dipl.-Ing., 59757 Arnsberg (DE)
(74) Vertreter: Bobzien, Hans Christoph

(56) Entgegenhaltungen:
- DE-A- 2 217 490
- DE-C- 10 061 653
- DE-C- 10 151 995

## Beschreibung

Die Erfindung betrifft eine Buchse, die zur Aufnahme und Positionierung eines Anschlusselements, insbesondere eines Gasentnahmeventils, in ein Aufnahmeelement in einer Versorgungseinheit einsetzbar ist. Die Buchse ist in ein Aufnahmeelement eingesetzt, das beispielsweise als eine Schranktür oder ein Aluminiumprofil ausgebildet sein kann.

In dem Aufnahmeelement ist eine Öffnung zur Aufnahme der Buchse vorgesehen. Die Buchse ist vorzugsweise als Kunststoffteil ausgebildet und hat entlang der Mittelachse eine durchgängige offnung zur Positionierung der Entriegelungshülse des Gasentnahmeventils, die vorzugsweise als Zylinder ausgebildet ist. Die Entriegelungshülse wird also durch die Buchse in dem Aufnahmeelement gehalten.

Nachteilig an diesen aus dem Stand der Technik bekannten Buchsen ist, dass Toleranzunterschiede und Fehlstellungen in der Montagekette der Leitungen, Anschlusselemente und dergleichen zu Spannungen und Verklemmungen in der Entriegelungshülse führen. Über die Bauhöhe können sich derartige Fehlstellungen so addieren, dass es zu Funktionsstörungen der Entriegelungshülse bzw. des Anschlusselements kommt.

Ferner ist aus der DE 2 217 490 eine Baugruppe mit einer schwimmend gelagerten Mutter bekannt. Die Mutter kann im Verhältnis zu einem Metallkäfig eine rein translatorische Bewegung ausführen. Daneben sind aus der DE 100 61 653 und DE 101 51 995 weitere gattungsgemäße Buchsen bekannt.

Von diesem Problem ausgehend stellt sich der Erfindung die technische Problemstellung, eine aus dem Stand der Technik bekannte Buchse derart weiter zu entwickeln, dass Fehlfunktionen des Anschlusselements vermieden werden.

Dieses Problem wird erfindungsgemäß dadurch gelöst, dass die Buchse zweiteilig aus einem Bund und einer Abdeckplatte zusammengesetzt ist, dass der Bund und die Abdeckplatte aus einem miteinander verschweißbarem Material gefertigt sind, und dass zwischen dem Bund und der Abdeckplatte ein Ringraum ausgebildet ist, in den ein Schwimmring zur Aufnahme des Anschlusselements radial verschieblich einsetzbar ist.

Der Schwimmring ist demnach radial verschieblich im Verhältnis zur Buchse in dieser gelagert und kann somit eventuelle Fehlstellungen und Toleranzunterschiede in der Montagekette ausgleichen. Durch die erfindungsgemäße Ausbildung wird ein Verklemmen der Entriegelungshülse durch Toleranzunterschiede in der Montagekette wirksam vermieden.

Da die Buchse üblicherweise kreisringförmig ausgebildet ist, weist diese auf ihrer Innenseite einen ebenfalls kreisringförmigen Ringspalt auf, in den der als Schwimmring einsetzbar ist.

Eine besonders einfache Montage der erfindungsgemäßen Buchse ist dadurch realisierbar, dass die Buchse zweiteilig bestehend aus einem Bund und einer Abdeckplatte ausgebildet ist, die zusammensetzbar sind. In den zwischen dem Bund und der Abdeckplatte ausgebildeten Ringspalt ist bei der Montage der Buchse der Schwimmring einsetzbar.

Um durch die Montage hervorgerufene Fehlfunktionen der Buchse zu vermeiden, sind der Bund und die Abdeckplatte aus einem ersten miteinander verschweißbaren Material gefertigt und der Schwimmring ist aus einem zweiten, nicht mit dem Bund und der Abdeckplatte verschweißbaren Material gefertigt. Diese Ausbildung stellt sicher, dass es beim Verschweißen des Bundes und der Abdeckplatte nicht auch zu einer Verbindung zwischen dem Bund, der Abdeckplatte und dem Schwimmring kommt, welches die Funktionsfähigkeit der Buchse negativ beeinflussen würde. Üblicherweise werden die erfindungsgemäßen Buchsen aus Kunststoff gefertigt. Eine besonders wirtschaftliche und funktionsfähige Materialpaarung ist dadurch erzielbar, dass der Bund und die Abdeckplatte aus ABS gefertigt sind und der Schwimmring aus PA6. Andere Materialpaarungen sind grundsätzlich möglich.

Die Erfindung ist in den Zeichnungen beispielhaft anhand eines bevorzugten Ausführungsbeispiels veranschaulicht und im folgenden detailliert beschrieben. Es zeigen:

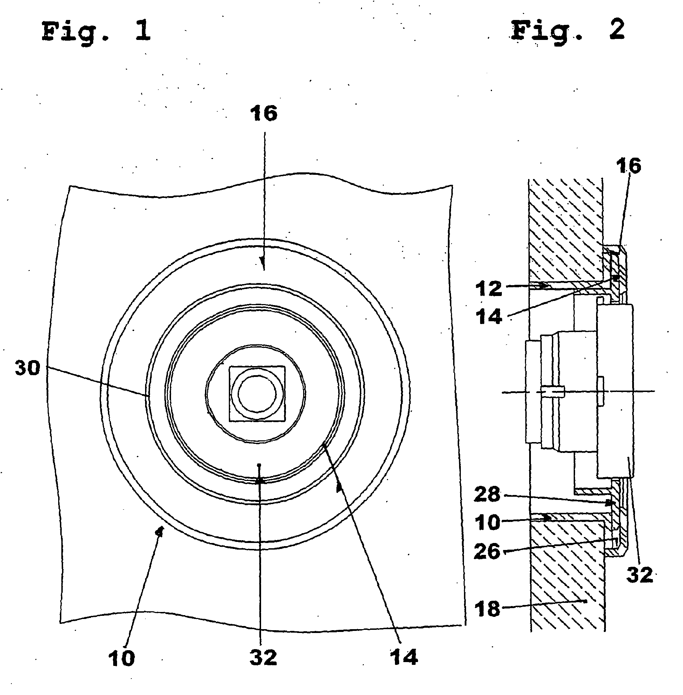

- Figur 1:: eine Frontansicht einer erfindungsgemäßen Buchse mit einer darin aufgenommenen Entriegelungshülse eines Gasentnahmeventils,
- Figur 2:: eine Seitenansicht der Buchse gemäß Figur 1,

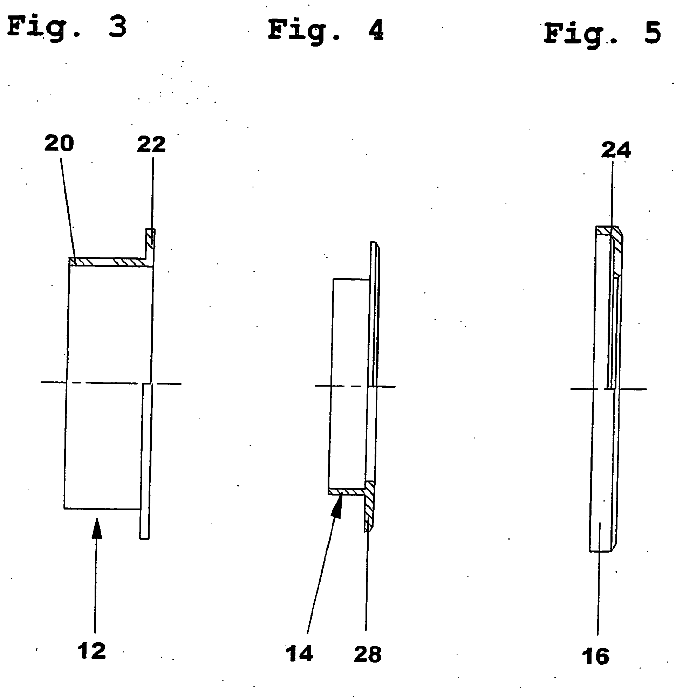

- Figur 3:: eine Seitenansicht, teilweise im Schnitt, des erfindungsgemäßen Bundes,
- Figur 4:: eine Seitenansicht, teilweise im Schnitt, des erfindungsgemäßen Schwimmringes und
- Figur 5:: eine Seitenansicht, teilweise im Schnitt, der erfindungsgemäßen Abdeckplatte.

Wie aus den Zeichnungen zu entnehmen ist, besteht die erfindungsgemäße Buchse, die in ihrer Gesamtheit mit 10 bezeichnet ist, aus einem Bund 12, einem Schwimmring 14 und einer Abdeckplatte 16.

Der Bund 12 ist in eine kreisförmige Öffnung einer Schranktür 18 einer Versorgungseinheit über einen Presssitz oder Verklebung eingesetzt. Der Bund 12 weist einen kreiszylindrischen Längsschenkel 20 und an einem Ende einen sich radial nach außen von diesem erstreckenden Querschenkel 22 auf, der einstückig an dem Längsschenkel 20 angeformt ist, der Längsschenkel 20 sitzt unter dem Presssitz in der Schranktür 18 und der Querschenkel 22 liegt außenseitig an der Schranktür 18 an.

Auf den Außenrand des Querschenkels 22 des Bundes 12 ist der umlaufende Längsschenkel der deckelförmigen Abdeckplatte 16 aufgesetzt. Der Bund 12 und die Abdeckplatte 16 sind an der Fügestelle miteinander verschweißt.

Da der Längsschenkel 24 der Abdeckplatte 16 länger ist, als die Dicke des Querschenkels des Bundes 12 entsteht in Einbaulage zwischen der Abdeckplatte und der äußeren Oberfläche des Bundes 12 ein Ringraum 26. In diesen Ringraum 26 ist der erfindungsgemäße Schwimmring 14 eingesetzt.

Der Schwimmring 14 ist gleichfalls als kreiszylindrischer Bund ausgebildet, an dem einseitig ein sich radial nach außen erstreckender Kragen 28 angeformt ist. Der Schwimmring 14 ist ferner mit einer zentralen Öffnung 30 zur Aufnahme eines als Gasentnahmeventil 32 ausgebildeten Anschlusselements versehen.

In Einbaulage ist der Schwimmring 14 radial verschieblich zwischen der Abdeckplatte und der Buchse gelagert, so dass sich dieser relativ zu den Bauteilen verschieben kann. Damit werden Spannungen in den Leitungen und an dem Anschlusselement vermieden, die durch Toleranzunterschiede oder Fehlstellungen in der Montagekette erzeugt werden.

In der vorliegenden Ausführungsform sind der miteinander verschweißte Bund 12 und die Abdeckplatte 16 aus dem Kunststoff ABS gefertigt und der in zwischen diesen gelagerte Schwimmring aus PA6. Durch diese Materialauswahl wird sichergestellt, dass sich der Schwimmring beim Verschweißen nicht mit dem Bund 12 und der Abdeckplatte 16 verbindet.

### Bezugszeichenliste

- 10: Buchse
- 12: Bund
- 14: Schwimmring
- 16: Abdeckplatte
- 18: Schranktür
- 20: Längsschenkel
- 22: Querschenkel
- 24: Längsschenkel
- 26: Ringraum
- 28: Kragen
- 30: Öffnung
- 32: Gasentnahmeventil

## Patentansprüche

1. In eine Versorgungseinheit (18) einsetzbare Buchse (10) zur Aufnahme und Positionierung eines Anshlusselements (32), insbesondere eines Gasentnahmeventils (32), **dadurch gekennzeichnet, dass** die Buchse (10) zweiteilig aus einem Bund (12) und einer Abdeckplatte (16) zusammengesetzt ist, dass der Bund (12) und die Abdeckplatte (16) aus einem miteinander verschweißbarem Material gefertigt sind, und dass zwischen dem Bund (12) und der Abdeckplatte (16) ein Ringraum (26) ausgebildet ist, in den ein Schwimmring (14) zur Aufnahme des Anschlusselements (32) radial verschieblich einsetzbar ist.

2. Buchse (10) nach Anspruch 1, **dadurch gekennzeichnet, dass** der Bund (12), die Abdeckplatte (16) und der Schwimmring (14) aus Kunststoff gefertigt sind.

## Claims

1. Bushing (10) insertable into a supply unit (18) to receive and position a connecting element (32), especially a gas removal valve (32), **characterised in that** the bushing (10) is composed in a two-part manner of a collar (12) and a cover plate (16), **in that** the collar (12) and the cover plate (16) are manufactured from a material which can be welded together, and **in that** there is formed between the collar (12) and the cover plate (16) an annulus (26) into which a floating ring (14) for receiving the connecting element (32) can be inserted in a radially displaceable manner.

2. Bushing (10) according to claim 1, **characterised in that** the collar (12), the cover plate (16) and the floating ring (14) are manufactured from plastics material.

## Revendications

1. Douille (10) insérable dans une unité d'approvisionnement (18), destinée à recevoir et à positionner un élément de raccord (32), en particulier une vanne de drainage de gaz (32), **caractérisée en ce que** la douille (10) est en deux parties et est composée d'un collet (12) et d'une plaque de recouvrement (16), **en ce que** le collet (12) et la plaque de recouvrement (16) sont fabriqués en un matériau pouvant être soudé ensemble et **en ce qu'**il est formé, entre le collet (12) et la plaque de recouvrement (16), un espace annulaire (26) dans lequel avec un déplacement radial, une bague flottante (14) peut être insérée pour recevoir l'élément de raccord (32).

2. Douille (10) selon la revendication 1, **caractérisée en ce que** le collet (12), la plaque de recouvrement (16) et la bague flottante (14) sont en matière synthétique.
